# EUROPÄISCHE PATENTSCHRIFT

(11) **EP 1 451 002 B1**
(45) Veröffentlichungstag und Bekanntmachung des Hinweises auf die Patenterteilung: **18.05.2005**
(21) Anmeldenummer: 02800571.8
(22) Anmeldetag: 25.09.2002
(51) Int. Cl.: B29C 47/40

(54) **KAEMMELEMENT MIT VON DER EVOLVENTENFLÄCHE ZURÜCKSPRINGENDER OBERFLÄCHENSTRUKTUR**
COMB ELEMENT PROVIDED WITH A SURFACE STRUCTURE LOCATED AT THE REAR RELATIVE TO THE INVOLUTE SURFACE
ELEMENT PEIGNEUR DOTE D'UNE STRUCTURE DE SURFACE SITUEE EN ARRIERE PAR RAPPORT A LA SURFACE DE DEVELOPPANTE

(30) Priorität: 02.10.2001 DE 10149765
(43) Veröffentlichungstag der Anmeldung: 01.09.2004
(73) Patentinhaber: Krauss-Maffei Kunststofftechnik GmbH, 80997 München (DE)
(72) Erfinder: RUCH, Joachim, 70499 Stuttgart (DE); FRITZ, Hans-Gerhard, 73066 Uhingen (DE); ABENDSCHEIN, Matthias, 72458 Albstadt (DE)
(74) Vertreter: Zollner, Richard, Dipl.-Phys.
(86) Internationale Anmeldenummer: PCT/EP2002/010726
(87) Internationale Veröffentlichungsnummer: WO 2003/031152

(56) Entgegenhaltungen:
- US-A- 3 729 178
- US-A- 5 044 757
- US-A- 5 851 065

## Beschreibung

Die Erfindung betrifft ein neuartiges Kämmelement für Zweiwellenextruder mit gleichsinnig drehenden, dichtkämmenden Schnecken.

Die bei solchen Extrudern üblicherweise verwendeten Schneckenelemente sind durch eine dichtkämmende Evolventenfläche gekennzeichnet. Derartige Schneckenelemente werden zur Durchführung von Misch-, Knet- und Förderoperationen in vielfältiger Anordnungsfolge eingesetzt. Die dabei zur Anwendung kommenden Evolventenflächen oder Außenkonturen sind beispielsweise aus M.L.Booy, Polymer Engineering and Science, September 1978 Volume 18, S. 973-984 bekannt.

Bekannt ist ferner das Einarbeiten von Fasermaterialien in Kunststoffschmelzen beim Extrudieren derselben, wobei das möglichst gleichmäßige Verteilen der Fasern einerseits und das Erhalten einer möglichst großen Faserlänge andererseits Ziel dieser Operationen ist. Dadurch erhält man eine maximale Verstärkungswirkung im Kunststoff durch die eingearbeiteten Fasern.

Problematisch ist bislang, dass für eine homogene Verteilung der Fasern im Kunststoff eine relativ große Extruderlänge zur Verfügung gestellt werden muss, was gleich bedeutend ist mit einer lang dauernden Misch- und Knetoperation, wobei mit zunehmender Dauer dieser Operationen Faserbrüche zunehmen, ebenso wie ein thermischer Abbau der Fasern, der insbesondere bei Naturfasern beobachtet wird. Letzteres führt zu Geruchsbildung, wodurch sich viele Anwendungsfälle für Naturfasern verschließen.

Aufgabe der vorliegenden Erfindung ist es, Schneckenelemente vorzuschlagen, mit denen eine schonende Einarbeitung der Fasern, insbesondere auch von Naturfasern in Kunststoffschmelzen unter Erhaltung einer möglichst langen Faserlänge möglich ist.

Diese Aufgabe wird erfindungsgemäß durch ein Kämmelement mit dichtkämmender Evolventenfläche für Zweiwellenextruder mit gleichsinnig drehenden dichtkämmenden Schnecken gelöst, wobei das Kämmelement an seiner Evolventenffäche eine Mehrzahl an Oberflächenstrukturelementen aufweist, welche von der Evolventenfläche rückspringend ausgebildet sind, wie in Anspruch 1 offenbart. Ausgestaltungen der Erfindung sind in den Unteransprüchen offenbart.

Die Evolventenfläche stellt nicht die aktuelle Außenoberfläche der Kämmelemente dar, die aufgrund der angeordneten Oberflächenstrukturelemente vielfältig strukturiert ist.

Als Grundkörper für die erfindungsgemäßen Schneckenelemente eignen sich im Prinzip alle bekannten Querschnittsgeometrien wie sie aus der vorgenannten Druckschrift beispielsweise bekannt sind. Darüber hinaus eignen sich auch kreisförmige Grundkörper, wobei immer nur sicher gestellt sein muss, dass die Evolventenflächen dichtkämmend sind. Im Sinne der vorliegenden Erfindung wird ein dichtkämmender Zustand insbesondere dann angenommen, wenn der Abstand zwischen den Evolventenflächen der Kämmelemente maximal 5 mm beträgt.

Man hat nun bei den erfindungsgemäßen Kämmelementen dichtkämmende Elemente vorliegen, wobei allerdings dies nur für die Evolventenflächen der Elemente gilt, nicht aber für die eigentliche aktuelle Oberfläche der Kämmelemente mit den in diese eingebrachten Oberflächenstrukturelementen.

Anders formuliert sind die Kämmelemente mit ihrem Grundkörper dichtkämmend ausgebildet, wobei eine kämmende Begegnung der individuellen Oberflächenstrukturelemente zweier Schneckenelemente, die auf den parallelen Schneckenwellen nebeneinander benachbart angeordnet sind, nicht vorkommt.

Damit wird vermieden, dass Schneidbewegungen resultieren, und die Fasern werden lediglich an der Oberfläche der Schneckenelemente auseinander gekämmt.

Möglich sind bei den Grundkörpern dichtkämmende Elemente mit 1 bis 4 Schmelzekanälen, es sind aber auch Elemente mit mehr Schmelzekanälen oder wie vorher bereits erwähnt mit Kreisgeometrie denkbar und möglich. Wichtig ist nur, dass die Evolventenflächen im Zwickelbereich dichtkämmend sind, d.h. wie zuvor ausgeführt einen maximalen Abstand von 5 mm aufweisen.

Bevorzugte Kämmelemente weisen Oberflächenstrukturelemente auf, die sich maximal 5 mm von der Evolventenfläche des Kämmelements senkrecht zur Tangentialrichtung nach innen erstrecken. Damit wird vermieden, dass zu große Vertiefungen in den Evolventenflächen der Kämmelemente vorkommen, in die Faseranteile eindringen und dann dort mehr oder weniger permanent verbleiben können. Durch die geringe Tiefe der Oberflächenstrukturelemente senkrecht zur Tangentialrichtung der Evolventenflächen gesehen wird sicher gestellt, dass in die freien Räume zwischen benachbarten Oberflächenstrukturelemente eingedrungene Fasem auch wieder aus dieser Vertiefung herausgefördert werden können und nicht permanent im Kämmelement verbleiben.

Bevorzugt werden Oberflächenstrukturelemente bei den erfindungsgemäßen Kämmelementen zum Einsatz gelangen, deren Oberfläche an der Spitze des einzelnen Oberflächenstrukturelements, d.h. benachbart zur Evolventenfläche des Kämmelements, ≤ 2mm², weiter bevorzugt ≤ 1,8 mm² beträgt. Dies erlaubt ein besonders effektives Eindringen der Spitzen der Oberflächenstrukturelemente in die Faserverbunde, die dem Extruder zur Verarbeitung zugeführt werden. Damit ist ein "Auskämmen" der Einzelfasern aus dem Faserverbund und deren Verteilung in der Kunststoffschmelze in möglichst kurzer Zeit möglich.

Als Grundkörper der Oberflächenstrukturelemente eignen sich beispielsweise Pyramiden, Pyramidenstümpfe, Kegel, Kegelstümpfe, Zylinder oder Quaderformen oder auch Mischformen.

Bevorzugt weist das Oberflächenstrukturelement bei einem erfindungsgemäßen Kämmelement einen Querschnitt auf, der sich von innen nach außen, d.h. in Richtung zur Evolventenfläche gesehen, vermindert.

Konische Strukturen wie bei Kegel oder Pyramide vorkommend, sind bevorzugt. Dies erlaubt insbesondere ein einfaches Eindringen der Oberflächenstrukturelemente in die Fasermaterialien (rovings), aber auch eine problemlose Freigabe dieser Materialien in die umgebende Kunststoffschmelze und fördert so eine möglichst schnelle und effektive homogene Verteilung dieser Materialien in der umgebenden Kunststoffschmelze.

Besonders effektive Kämmelemente weisen eine Flächendichte an Oberflächenstrukturelementen auf, derart, dass sich für eine flexible Faser mindestens noch 10⁸ Umschlingungsmöglichkeiten pro Flächeneinheit von 100 mm² ergeben. Weiter bevorzugt liegt diese Zahl der Umschlingungsmöglichkeiten bei 10¹² und mehr.

Die erfindungsgemäßen Kämmelemente sind so geformt, dass sie eine Evolventenfläche aufweisen, die im montierten Zustand bei zwei benachbarten auf parallelen Schneckenwellen montierten Kämmelementen an ihren Evolventenflächen einen Abstand im Zwickelbereich von maximal 5 mm sicher stellen.

Bei der Herstellung der erfindungsgemäßen Kämmelemente kann man so vorgehen, dass man ein Kämmelement mit der gewünschten Evolventenfläche herstellt und dann durch Materialabtragung die Oberflächenstrukturelemente in die Evolventenfläche einarbeitet.

Alternativ kann auch ein Kämmelement als Ausgangspunkt dienen, welches kleinere Abmessungen besitzt als die anvisierte Evolventenfläche. Diese wird erst durch das Aufbringen der Oberflächenstrukturelemente auf die Oberfläche des ursprünglichen Kämmelements gebildet.

Die Erfindung betrifft weiter einen Zweiwellenextruder mit gleichsinnig drehenden dichtkämmenden Schnecken, welcher pro Schneckenwelle ein oder mehrere der erfindungsgemäßen Kämmelemente wie zuvor beschrieben umfasst.

Hierbei können die Kämmelemente gemäß vorliegender Erfindung in Transportrichtung des Extruders gesehen nach der Einspeisevorrichtung für Fasermaterialien angeordnet werden, wobei die Vereinzelung und Homogenisierwirkung durch die Zahl der hintereinander pro Welle angeordneten Kämmelemente variiert und angepasst werden kann.

Normalerweise empfiehlt es sich, die erfindungsgemäßen Kämmelemente mit einem gewissen Abstand in Axialrichtung der Welle anzuordnen und gegebenenfalls zwischen den erfindungsgemäßen Kämmelementen weitere alternative Mischelemente anzuordnen.

Hier kann es sich z.B. empfehlen, auf den Schneckenwellen zunächst Schneckenelemente zur Grobverteilung der Faseranteile anzuordnen und dann erst erfindungsgemäße Kämmelemente zur Homogenisierung des Faseranteils in dem Kunststoffmaterial.

Ferner betrifft die Erfindung die Verwendung der erfindungsgemäßen Kämmelemente zur Vereinzelung und Einarbeitung von Fasern in Kunststoffschmelzen ganz allgemein, wobei die Erfindung insbesondere für die temperaturempfindlichen Naturfasern geeignet ist.

Als Naturfasern kommen insbesondere Flachs-, Hanf-, Kenaf-, Sisal-, Kokos-, Baumwoll- und Jutefasern in Frage. Selbstverständlich kann man auch anorganische und synthetische organische Fasern mit großem Erfolg mit den erfindungsgemäßen Schneckenelementen verarbeiten. Dies gilt insbesondere für Glas- und Kohlefasern sowie Aramidfasern.

Diese und weitere Vorteile der Erfindung werden im Folgenden anhand der Zeichnung noch näher erläutert. Es zeigen im Einzelnen:
- Figur 1: eine Übersicht über Evolventenflächen von erfindungsgemäßen Kämmelementen;
- Figur 2: eine fotografische Darstellung mit Vergrößerung im Detail eines erfindungsgemäßen Kämmelementes;
- Figur 3: eine schematisierte Teildarstellung von Oberflächenstrukturelementen eines erfindungsgemäßen Kämmelementes;
- Figur 4: Kämmelemente gemäß Figur 1 montiert auf den Schneckenwellen eines Zweiwellenextruders; und
- Figur 5: eine Testanordnung zur Überprüfung der Wirksamkeit eines erfindungsgemäßen Kämmelementes.

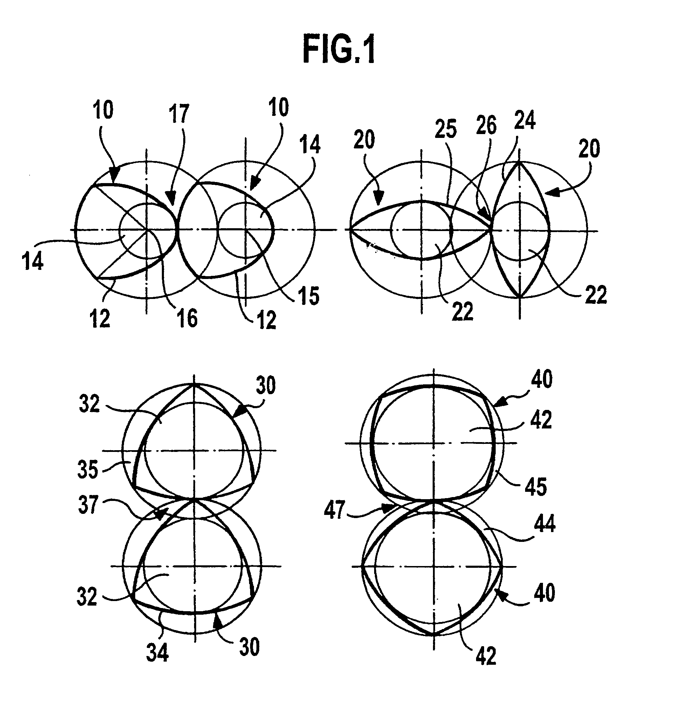

Figur 1 zeigt vier verschiedene Versionen von Evolventenflächen von Kämmelementen der vorliegenden Erfindung, welche aufgrund ihrer unterschiedlichen Evolventenflächen einen, zwei, drei oder vier Schmelzegänge im Zweiwellenextruder bilden. Hierbei zeigt die Figur 1 in der linken oberen Darstellung zwei Kämmelemente 10, die mit ihren Evolventenflächen 12 zusammenwirken und auf der Verbindungslinie der beiden Achsen der Wellen 14 einen Zwickel 17 bilden, für den erfindungsgemäß vorzugsweise ein maximaler Abstand von 5 mm gegeben sein soll.

Aufgrund des Einbringens von Oberflächenstrukturelementen (hier im Einzelnen nicht dargestellt) in die Evolventenfläche 12 der Kämmelemente 10 ergibt sich im Bereich des Zwickels 17 ein Auskämmen von Fasern aus dem in den Extruder eingespeisten Faserstrang und eine Vereinzelung dieser Fasern und Verteilung in der umgebenden Kunststoffschmelze.

Dasselbe geschieht bei einer weiteren Ausführungsform von den erfindungsgemäßen Kämmelementen 20 (Figur 1 oben rechts), welche auf Extruderwellen 22 montiert sind und mit ihren Evolventenflächen 24, 25 aneinander abrollen und auf der Verbindungsachse der Wellenmittelpunkte einen Zwickel 26 bilden, wo sich der im Zusammenhang mit der vorher beschriebenen Version stattfindende Auskämmeffekt und Verteilungsvorgang abspielt.

Die beiden Kämmelemente 20 bilden zwei Schmelzekanäle aus, während die Version, die in der linken unteren Ecke der Figur 1 dargestellt ist, drei Schmelzekanäle ausbildet. Hier wälzen sich Evolventenflächen 34, 35 der beiden Kämmelemente 30 aneinander ab und bilden in der Verbindungslinie der Mittelpunkte der Wellen 32 einen Zwickel 37, in dem der Auskämmeffekt der Fasern abläuft. Eine weitere Variante ist schließlich in der rechten unteren Ecke der Figur 1 dargestellt, wobei Kämmelemente 40 auf Wellen 42 angeordnet sind. Aufgrund der Konfiguration mit vier Spitzen am Außenumfang der Kämmelemente bilden sich vier Kanäle und die Evolventenfläche 44, 45 wälzen sich aneinander ab und bilden einen Zwickel 47, in dem der vorbeschriebene Auskämmvorgang stattfindet.

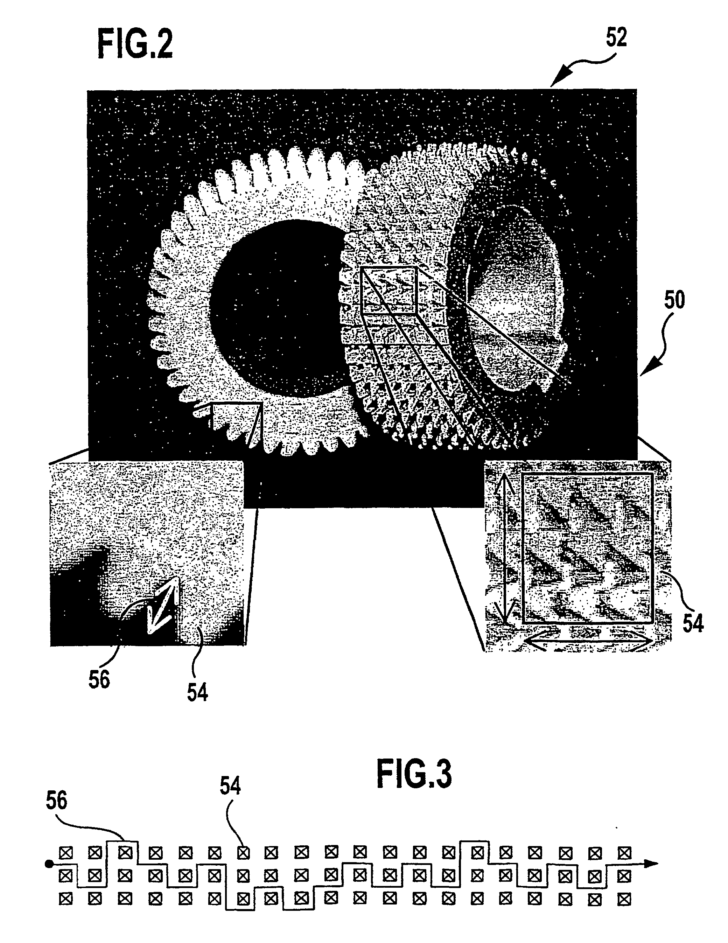

Figur 2 zeigt im Einzelnen eine bevorzugte Ausführungsform eines Kämmelementes 50, das als Evolventenfläche Kreisform annimmt, in die dann in sieben parallelen Reihen annähernd pyramidenförmige Zähne 54 eingearbeitet sind. Aufgrund der Pyramidenform verjüngen sich die Querschnittsflächen der einzelnen Oberflächenstrukturelemente 54 in Richtung zur Evolventenfläche hin im Wesentlichen stetig. Im vorliegenden Beispiel liegt die Querschnittsfläche der Spitze, d.h. benachbart zur Evolventenfläche 52, im Bereich von weniger als 1 mm². Die Tiefe der Zähne liegt unter 5 mm. Im vorliegenden Fall sind es ca. 1,5 mm, und dies entspricht auch ungefähr dem Abstand der Spitzen der Zähne voneinander.

Die hier gezeigte Pyramidenstruktur der Oberflächenstrukturelemente lässt sich nicht nur bei der Kreisform der Evolventenfläche eines Kämmelementes der vorliegenden Erfindung realisieren, sondern ist auch möglich bei den in Figur 1 gezeigten Varianten.

Die hier gezeigte Pyramidenform oder Pyramidenstumpfform lässt sich ohne große Änderung in der Wirksamkeit des erfindungsgemäßen Kämmelementes betreffend die Vereinzelung von Fasern aus einem Faserstrang heraus, modifizieren, z.B. in Kegelstumpfform oder auch andere unregelmäßige Konfigurationen, wobei im vorliegenden Beispiel der Figur 2 die Pyramidenform aufgrund der einfachen Herstellungsweise gewählt wurde.

Wichtig zur Optimierung des Auskämmeffektes der erfindungsgemäßen Kämmelemente ist es, dass sich der Querschnitt der Elemente in Richtung zur Evolventenfläche 52 hin verjüngt, so dass die Elemente ungefähr Nadelform, oder wie hier gezeigt, Pyramidenform aufweisen. Dadurch dringen die Spitzen der Oberflächenstrukturelemente leichter in ein Faserbündel ein und können aus diesem leicht Fasern herauskämmen.

Die Wahl der Tiefe der Oberflächenstrukturelemente oder der Zähne wird bestimmt durch den Wunsch, beim Auskämmeffekt die Fasern wieder an die umgebende Polymerschmelze freizugeben, so dass Fasern nicht am Grund der Oberflächenelementstruktur haften bleiben und diese zusetzen. Dem dient auch die sich verjüngende Form der Oberflächenstrukturelemente, die ein leichteres Auslösen der zwischen der einzelnen Oberflächenstrukturelementen verhakten Fasern ermöglichen.

Aufgrund theoretischer Überlegungen, die ausgehen von den typischen Faserdicken der zu verarbeitenden Verstärkungsfasem 56, kann man aufgrund eines mathematischen Modells berechnen, dass bei einer für den gewünschten Auskämmeffekt notwendigen Dichte von Oberflächenstrukturelementen pro Flächeneinheit von 100 mm² eine minimale Zahl von Umschlaufungsalternativen von 10⁸ vorteilhaft sind. Hierbei wird, wie in Figur 3 gezeigt, die Berechnung anhand von 20 Dreier-Reihen an Oberflächenstrukturelementen 54, die jeweils vier Umschlaufungsalternativen bieten, gerechnet.

Weiter bevorzugt ist eine minimale Zahl an Umschlaufungsalternativen von 10¹².

Umgerechnet auf das Flächenelement von 100 mm² ergibt sich so eine minimale Belegung dieser Fläche mit 7 bis 9 Oberflächenstrukturelementen.

Aufgrund der Tatsache, dass die Oberflächenstrukturelemente nicht über die Evolventenfläche 52 des Kämmelements 50 hinausragen, kann, da das benachbarte auf der parallelen Schneckenwelle angeordnete Kämmelement sich mit seiner Evolventenfläche an der Evolventenfläche 52 des Kämmelements 50 abrollt, keine Schneidwirkung eintreten und es bleibt bei dem zuvor beschriebenen Auskämmeffekt im Zwickel zwischen den beiden Kämmelementen.

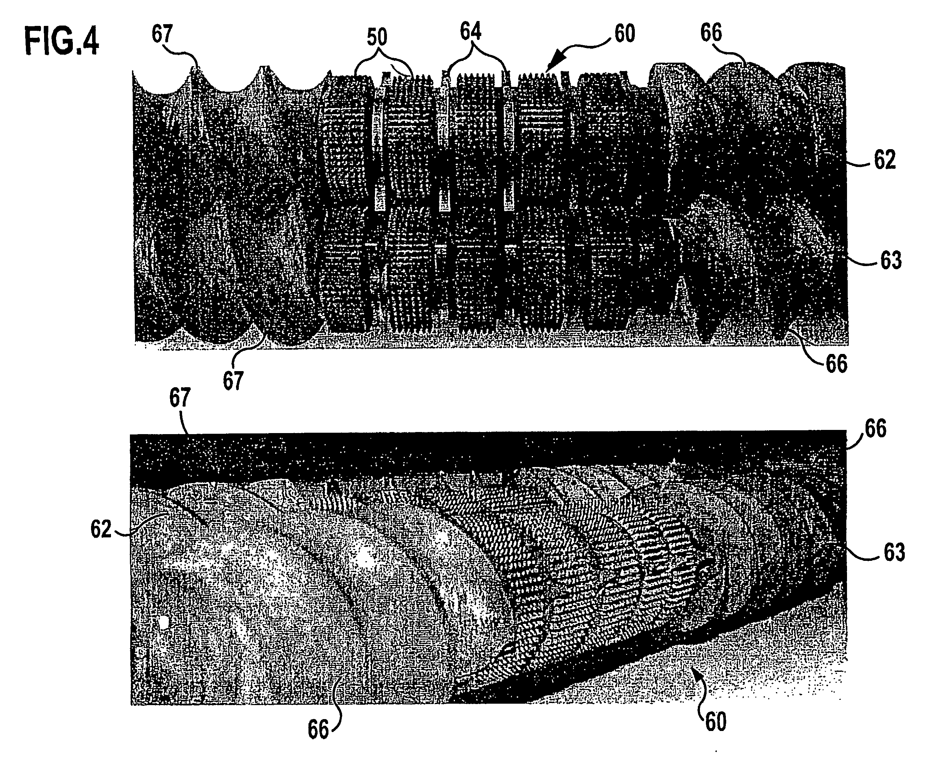

Figur 4 zeigt nun in einer fotografischen Darstellung eine mögliche Anordnung der erfindungsgemäßen Kämmelemente 50 in einem Zweiwellenextruder 60 mit zwei Schneckenwellen 62, 63 in unterschiedlicher perspektivischer Darstellung. Hier sind jeweils auf den beiden Wellen 62, 63 auf gleicher Höhe erfindungsgemäße Kämmelemente 50 angeordnet, wobei diese durch weitere Schneckenelement 64 von einander auf Abstand gehalten werden. Die Schneckenelemente 64 in Form von Zweizalmelementen können zur Grobverteilung der Fasern verwendet werden, und im vorliegenden Beispiel der Figur 4 findet eine Feinverteilung wechselweise mit einer Grobverteilung statt.

Vor und nach den erfindungsgemäßen Kämmelementen 50 können herkömmliche schraubenförmige Förderschneckenelemente verwendet werden, wie dies anhand der Schneckenelemente 66, 67 in Figur 4 dargestellt ist.

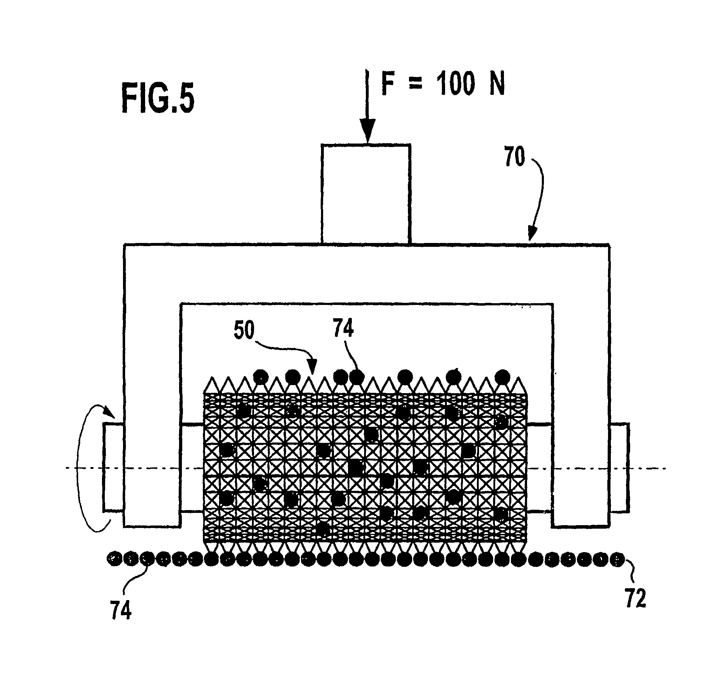

Um den Auskämmeffekt der erfindungsgemäßen Kämmelemente besser zu illustrieren und quantifizierbar zu machen wird im Folgenden anhand von Figur 5 ein Test beschrieben, mit dem sich die Effizienz eines erfindungsgemäßen Kämmelementes bestimmen lässt.

Hier wird insbesondere die Nadelstruktur dieser Oberflächenstrukturelemente deutlich im Vergleich zu konventionellen Igel-, Schnecken-, Zahn- und Turbinenmischelementen, deren Wirkung sich auf die Knet-, Misch- und/oder Förderfunktionen beschränkt.

Im Test wird eine Monoschicht 72 aus elastomeren Kunststoffpartikeln 74 (z.B. aus Ethylen/Okten-Copolymer vom Typ Engage 8200) ausgelegt, welche einen Durchmesser von 2 mm aufweisen. Mit der in Figur 5 dargestellten Halterung 70, werden die über eine vorgegebene Versuchsbreite aneinander gereihten, drehbar gelagerten, erfindungsgemäßen Kämmelemente 50 nun mit einer vorgegebenen Kraft (F=100N) über die Monoschicht 72 geführt. Wünschenswert ist ein Einsammelerfolg von mindestens 5 % bei einem Verfahrweg der Halterung 70, der dem Umfang der Evolventenfläche der verwendeten Kämmelemente 50 entspricht. Die Verfahrgeschwindigkeit ist an sich nicht kritisch, jedoch empfiehlt sich ein Wert von ungefähr 10 cm/30 s.

Die erfindungsgemäßen Kämmelemente eignen sich insbesondere für die Verarbeitung von Naturfasermaterialien zu Naturfaserverbundmaterialien, wobei die flexiblen Naturfasern homogen und schonend auseinander gekämmt und in einer extrem gleichmäßigen Verteilung in der Polymerschmelze eingearbeitet werden. Insbesondere beobachtet man in den fertigen Bauteilen, dass hier mehr oder weniger nur Elementarfasern und keine Faseragglomerate bzw. Fasercluster mehr vorliegen, wobei der Langfaseranteil (I_{F} > 1 mm) mindestens 20 Gew.-% beträgt.

In probeweise hergestellte Platten mit einer mit 1 phr Maleinsäureanhydrid modifizierten Polypropylenmatrix wurden 30 Gew.-% Röstflachs eingearbeitet. Die anschließend in einem Pressvorgang hergestellten Platten mit einer Dicke von 3 mm zeichnen sich durch herausragende mechanische Eigenschaften sowohl im statischen als auch dynamischen Belastungsfall aus. Für die Zugfestigkeit und die Schlagzähigkeit, welche an Proben quer und längs zur Extrusionsrichtung ermittelt wurden, erhält man mittlere Kennwerte in der Höhe von σ_{b}=93N/mm² und aₖ=18kJ/m².

## Patentansprüche

1. Kämmelement 10, 20, 30, 40 mit dichtkämmender Evolventenfläche 12, 24, 25, 34, 35, 44, 45 für Zweiwellenextruder 16, 15, 22, 32, 42 mit gleichsinnig drehenden, dichtkämmenden Schnecken, wobei das Kämmelement an seiner Evolventenfläche eine Mehrzahl von Oberflächenstrukturelementen 54 aufweist, welche von der Evolventenfläche rückspringend ausgebildet sind.

2. Kämmelement nach Anspruch 1, **dadurch gekennzeichnet, dass** die Oberflächenstrukturelemente sich maximal 5 mm von der Evolventenfläche des Kämmelements senkrecht zur Tangentialrichtung nach innen erstrecken.

3. Kämmelement nach Anspruch 1 oder 2, **dadurch gekennzeichnet, dass** die Oberflächenstrukturelemente an ihrer der Evolventenfläche benachbarten Spitze eine Oberfläche von ≤ 2 mm², weiter bevorzugt ≤ 1,8 mm² aufweisen.

4. Kämmelement nach einem der voranstehenden Ansprüche, **dadurch gekennzeichnet, dass** die Oberflächenstrukturelemente Grundkörper aufweisen, die ähnlich sind zu Pyramiden, Kegelstümpfen, Zylinder oder Quaderformen oder Mischformen dieser Grundkörper darstellen.

5. Kämmelement nach einem der Ansprüche 1 bis 4, **dadurch gekennzeichnet, dass** das Kämmelement Oberflächenstrukturelemente aufweist, deren Querschnitt sich von deren Basis zur Spitze vermindert.

6. Kämmelement nach Anspruch 5, **dadurch gekennzeichnet, dass** die Oberflächenstrukturelemente im Wesentlichen konisch ausgebildet sind.

7. Kämmelement nach einem der Ansprüche 1 bis 6, **dadurch gekennzeichnet, dass** die Oberflächenstrukturelemente mit einer Flächendichte angeordnet sind, derart, dass sich bei einer Flächeneinheit von 100 mm² mindestens 10⁸ Umschlaufungsmöglichkeiten für eine flexible Faser ergeben.

8. Kämmelement nach einem der voranstehenden Ansprüche, **dadurch gekennzeichnet, dass** die Evolventenfläche des Kämmelements so ausgebildet ist, dass sich zwischen zwei Kämmelementen auf parallelen Schneckenwellen ein Evolventenflächenabstand von maximal 5 mm ergibt.

9. Kämmelement nach einem der voranstehenden Ansprüche, **dadurch gekennzeichnet, dass** die Oberflächenstrukturelemente so ausgebildet sind, dass diese gegenüber den Oberflächenstrukturelementen eines damit zusammenwirkenden Kämmelements eine Mindestabstand einhalten, so dass eine Schneidwirkung vermieden wird.

10. Zweiwellenextruder mit gleichsinnig drehenden, dichtkämmenden Schnecken, umfassend pro Schneckenwelle ein oder mehrere Kämmelemente gemäß einem der Ansprüche 1 bis 9.

11. Zweiwellenextruder nach Anspruch 10, **dadurch gekennzeichnet, dass** die Kämmelemente in Transportrichtung des Extruders gesehen nach einer Einspeisevorrichtung für Fasermaterialien auf den Wellen angeordnet sind.

12. Zweiwellenextruder nach Anspruch 10 oder 11, **dadurch gekennzeichnet, dass** pro Welle mehrere Kämmelemente hintereinander angeordnet sind.

13. Zweiwellenextruder nach Anspruch 12, **dadurch gekennzeichnet, dass** die Kämmelemente auf ihrer jeweiligen Welle in Axialrichtung zu einander beabstandet angeordnet sind.

14. Zweiwellenextruder nach einem der Ansprüche 10 bis 13, **dadurch gekennzeichnet, dass** in Transportrichtung des Extruders nach einer Einspeisevorrichtung für Fasermaterialien zunächst Schneckenelemente für eine Grobverteilung der Fasermaterialien vorgesehen sind und anschließend Kämmelemente zur homogenen Verteilung der Fasermaterialien in der Kunststoffschmelze angeordnet sind.

15. Verwendung von Kämmelementen gemäß einem der Ansprüche 1 bis 9, zur Vereinzelung und Einarbeitung von Fasern in Kunststoffschmelzen.

16. Verwendung nach Anspruch 15, **dadurch gekennzeichnet, dass** die Fasern Naturfasern, insbesondere Flachs-, Hanf-, Kenaf-, Sisal-, Kokos-, Baumwoll- oder Jutefasern sind.

17. Verwendung nach Anspruch 15, **dadurch gekennzeichnet, dass** die Fasern anorganischer Natur, insbesondere Glas- oder Kohlefasern sind.

18. Verwendung nach Anspruch 15, **dadurch gekennzeichnet, dass** die Fasern Aramidfasern sind.

19. Verwendung nach einem der Ansprüche 15 bis 18, **dadurch gekennzeichnet, dass** die Fasern nach dem Compoundiervorgang eine mittlere Faserlänge von mindestens 1 mm aufweisen.

## Claims

1. Comb element (10, 20, 30, 40) with closely intermeshing involute surface (12, 24, 25, 34, 35, 44, 45) for a twin-screw extruder (16, 15, 22, 32, 42) with closely intermeshing screws rotating in the same direction, said comb element comprising on its involute surface a plurality of surface structure elements (54) which are set back from the involute surface.

2. Comb element according to claim 1, **characterised in that** the surface structure elements extend inwardly at a maximum of 5 mm from the involute surface of the comb element perpendicularly to the tangential direction.

3. Comb element according to claim 1 or 2, **characterised in that** the surface structure elements have a surface area of ≤ 2 mm², more preferably ≤ 1.8 mm² at their tip adjacent to the involute surface.

4. Comb element according to any one of the preceding claims, **characterised in that** the surface structure elements have base bodies which are similar to pyramids, truncated cones, cylinders or cuboid forms or are mixed forms of these basic bodies.

5. Comb element according to any one of claims 1 to 4, **characterised in that** the comb element has surface structure elements, the cross-section of which decreases from their base to the tip.

6. Comb element according to claim 5, **characterised in that** the surface structure elements are substantially conical in design.

7. Comb element according to any one of claims 1 to 6, **characterised in that** the surface structure elements are arranged at a surface density such that at least 10⁸ looping possibilities per unit area of 100 mm² are produced for a flexible fibre.

8. Comb element according to any one of the preceding claims, **characterised in that** the involute surface of the comb element is constructed such that an involute surface spacing of a maximum of 5 mm is produced between two comb elements on parallel screw shafts.

9. Comb element according to any one of the preceding claims, **characterised in that** the surface structure elements are configured in such a way that they adhere to a minimum spacing with respect to the surface structure elements of a comb element cooperating therewith, so a cutting effect is avoided.

10. Twin-screw extruder with closely intermeshing screws rotating in the same direction, comprising one or more comb elements per screw shaft according to any one of claims 1 to 9.

11. Twin-screw extruder according to claim 10, **characterised in that** the comb elements, viewed in the conveying direction of the extruder, are arranged on the shafts downstream from a feed device for fibre materials.

12. Twin-screw extruder according to claim 10 or 11, **characterised in that** a plurality of comb elements are arranged one behind the other per shaft.

13. Twin-screw extruder according to claim 12, **characterised in that** the comb elements are arranged on their respective shaft spaced apart from one another in the axial direction.

14. Twin-screw extruder according to any one of claims 10 to 13, **characterised in that** screw elements for a coarse distribution of the fibre materials are firstly provided in the conveying direction of the extruder downstream from a feed device for fibre materials and comb elements are arranged thereafter for the homogenous distribution of the fibre materials in the plastics material melt.

15. Use of the comb elements according to any one of claims 1 to 9, for separating and incorporating fibres in plastic material melts.

16. Use according to claim 15, **characterised in that** the fibres are natural fibres, in particular flax fibres, hemp fibres, kenaf fibres, sisal fibres, coconut fibres, cotton fibres or jute fibres.

17. Use according to claim 15, **characterised in that** the fibres are of an inorganic nature, in particular glass or carbon fibres.

18. Use according to claim 15, **characterised in that** the fibres are aramide fibres.

19. Use according to any one of claims 15 to 18, **characterised in that** the fibres have a mean fibre length of at least 1 mm after the compounding process.

## Revendications

1. Elément de cardage (10, 20, 30, 40) comprenant une surface développante (12, 24, 25, 34, 35, 44, 45) à cardage ras pour des extrudeuses à deux arbres (16, 15, 22, 32, 42) comprenant des vis sans fin tournant dans le même sens, à cardage ras, l'élément de cardage comprenant sur sa surface développante une pluralité d'éléments structurels superficiels (54), lesquels sont conçus en reculant brusquement de la surface développante.

2. Elément de cardage selon la revendication 1, **caractérisé en ce que** les éléments structurels superficiels s'étendent vers l'intérieur au maximum à 5 mm de la surface développante de l'élément de cardage perpendiculairement à la direction tangentielle.

3. Elément de cardage selon la revendication 1 ou 2, **caractérisé en ce que** les éléments structurels superficiels comprennent sur leur pointe voisine de la surface développante une surface ≤2 mm², de manière préférée entre toutes ≤1,8 mm².

4. Elément de cardage selon l'une quelconque des revendications précédentes, **caractérisé en ce que** les éléments structurels superficiels comprennent des corps de base qui sont semblables à des pyramides, des cônes tronqués, des cylindres ou des formes parallélépipédiques ou représentent des formes mixtes de ces corps de base.

5. Elément de cardage selon l'une des revendications 1 à 4, **caractérisé en ce que** l'élément de cardage comprend des éléments structurels superficiels, dont la section transversale diminue depuis leur base jusqu'à la pointe.

6. Elément de cardage selon la revendication 5, **caractérisé en ce que** les éléments structurels superficiels sont conçus en étant sensiblement coniques.

7. Elément de cardage selon l'une des revendications 1 à 6, **caractérisé en ce que** les éléments structurels superficiels comprenant une densité superficielle sont disposés de telle sorte qu'il en résulte au moins 10⁸ possibilités de bouclage pour une fibre flexible dans le cas d'une unité de surface de 100 mm².

8. Elément de cardage selon l'une quelconque des revendications précédentes, **caractérisé en ce que** la surface développante de l'élément de cardage est conçue de sorte qu'il en résulte une distance de surface développante de 5 mm au maximum entre deux éléments de cardage sur des arbres de vis sans fin parallèles.

9. Elément de cardage selon l'une quelconque des revendications précédentes, **caractérisé en ce que** les éléments structurels superficiels sont conçus de sorte que ceux-ci, par rapport aux éléments structurels superficiels d'un élément de cardage coopérant avec ceux-ci, respectent une distance minimale, de sorte que cela évite une action de découpage.

10. Extrudeuse à deux arbres comprenant des vis sans fin tournant dans le même sens, à cardage ras, comprenant par arbre de vis sans fin un ou plusieurs élément(s) de cardage selon l'une des revendications 1 à 9.

11. Extrudeuse à deux arbres selon la revendication 10, **caractérisée en ce que** les éléments de cardage, vu dans la direction de transport de l'extrudeuse, sont disposés sur les arbres après un dispositif d'alimentation en matériaux fibreux.

12. Extrudeuse à deux arbres selon la revendication 10 ou 11, **caractérisée en ce que** par arbre, plusieurs éléments de cardage sont disposés les uns derrière les autres.

13. Extrudeuse à deux arbres selon la revendication 12, **caractérisée en ce que** les éléments de cardage sont disposés à distance les uns des autres sur leur arbre respectif dans la direction axiale.

14. Extrudeuse à deux arbres selon l'une des revendications 10 à 13, **caractérisée en ce que** des éléments de vis sans fin sont d'abord prévus dans la direction de transport de l'extrudeuse après un dispositif d'alimentation en matériaux fibreux, pour une répartition grossière des matériaux fibreux, et ensuite des éléments de cardage sont disposés dans la masse fondue de matière synthétique en vue d'une répartition homogène des matériaux fibreux.

15. Utilisation d'éléments de cardage selon l'une des revendications 1 à 9, pour isoler et incorporer des fibres dans les masses fondues de matière synthétique.

16. Utilisation selon la revendication 15, **caractérisée en ce que** les fibres sont des fibres naturelles, en particulier des fibres de lin, de chanvre, de kenaf, de sisal, de coco, de laine ou de jute.

17. Utilisation selon la revendication 15, **caractérisée en ce que** les fibres sont de nature anorganique, en particulier des fibres de verre ou de carbone.

18. Utilisation selon la revendication 15, **caractérisée en ce que** les fibres sont des fibres d'aramide.

19. Utilisation selon l'une des revendications 15 à 18, **caractérisée en ce que** les fibres comprennent après le processus de compoundage une longueur de fibre moyenne d'au moins 1 mm.
